# EUROPEAN PATENT SPECIFICATION

(11) **EP 1 315 067 B1**
(45) Date of publication and mention of the grant of the patent: **26.07.2006**
(21) Application number: 03002301.4
(22) Date of filing: 28.11.2000
(51) Int. Cl.: G06F 1/00

(54) **Method and system for using a virus free file certificate**
Verfahren und Vorrichtung zur Verwendung eines virenfreien Dateizertifikats
Méthode et système pour l'utilisation d'un certificat numérique sans virus pour un fichier

(30) Priority: 06.01.2000 EP 00480006
(43) Date of publication of application: 28.05.2003
(62) Divisional of application: 00480109.8
(73) Proprietor: International Business Machines Corporation, Armonk, NY 10504 (US)
(72) Inventor: Fieschi, Jacques, 06140 Vence (FR); Hericourt, Olivier, 06800 Cagnes sur Mer (FR); Le Pennec, Jean-Francois, 06100 Nice (FR)
(74) Representative: Etorre, Yves Nicolas

(56) References cited:
- EP-A- 0 859 488
- WO-A-97/50036
- GB-A- 2 283 341

## Description

### Technical field

The present invention relates to computer virus and more particularly to a method and system for using in a server or client system a virus-free file certificate generated in a virus-free certificate authority.

### Background of the invention

Among all computing and networking security issues, the most important cause of concern does not come from intrusions, but from the widespread proliferation of viruses. Viral infections represent the great majority of all security incidents.

### Virus Protection

Virus protection for large organizations has become more and more complex and difficult because of:
- the combined use of heterogeneous systems and practices,
- the widespread use of distributed or client/server systems, and
- the free exchange of data files via network sharing, e-mail, Internet ...

Until recently, viral infections threatened only data residing on storage media, such as hard drives and floppy disks. However, with the emergence of macro viruses, the threat has spread to applications. Most organizations are not aware of this level of penetration and are not organized to manage and prevent virus attacks. An effective virus protection software must prevent infections rather than simply treating them after they have already occurred. Anti-virus solutions need a uniform plan, with a centralized control, automated virus signature updates, and support for multiple platforms, protocols, and file types.

### Computer Viruses

A computer virus is any program created to reproduce itself. A virus reproduces itself by attaching itself to programs, files, or even to boot sectors of disks. A virus is activated when the infected file or disk is opened or accessed. Once a virus resides in a memory, it can attach itself to the next file or disk accessed, and so on. A virus may be designed to do harm. A virus may also have unintended consequences by overwriting important computer information and by causing costly inconveniences to users and network managers. There are four general types of computer virus:
- **File Viruses** (including macro viruses), which are attached to files;
- **Boot sector Viruses** in which the boot sectors of floppy or hard disks are infected;
- **Master Boot Record (MBR) Viruses** which infect the disk master boot record; and
- **Multi-partite Viruses** that are a combination of a file virus and a boot sector virus.

### Virus Disguises

Viruses need to avoid detection in order to succeed in corrupting target computers. Simple viruses, with easily detectable signatures are giving way to more sophisticated virus types:
- **Polymorphic Viruses** : they change their signature, or profile, each time they are activated so that a fixed signature filter will miss them.
- **Stealth Viruses :** they attempt to hide their presence by intercepting interrupt services and by feeding back false information to anti-virus products and end users.
- **Encrypted Viruses :** they are delivered within an encrypted file and are undetectable by a simple anti-virus.

### Sources of Infection

Every improvement in network and communication technologies opens new avenues through which viruses can infect your system. Most of former viruses were boot sector viruses, in which the boot sectors of floppy or hard disks were infected.

### Macro Viruses

As stated earlier, the creation of macro viruses has changed this environment dramatically. A macro virus is a set of instructions comprising powerful macro routines initially designed for word processing and spreadsheet applications. These macro languages enable a myriad of useful functions which can be imbedded into a document and which can be executed when the document is opened for view or use.

### Internet

With the exploding development of the Internet, viruses have catastrophic possibilities. The Internet introduces two different virus threats.
- The first threat is caused by the download of files comprising viruses when these files are browsed or transferred using for instance FTP (File Transfer Protocol) routines. Public shareware (shared software) and executable routines of all types, including formatted presentations, are a growing source of virus infection. Furthermore, new Internet virus threats are beginning to appear in the form of malicious JAVA and Active-X applets.
- The second threat comes from electronic mail (e-mail). Most Internet e-mail systems provide a very rich capability to attach formatted documents to mail sent over the network. These e-mail messages can be broadcast to individuals or groups of individuals with the simple stroke of a key! Infected documents or files can flood a corporate network through gateways and mail servers. As networking, telecommunications, remote access, message systems supporting attachments of all kinds become more and more common, viruses will exploit these new electronic pathways to attack systems that were heretofore unreachable.

### Groupware Complications

A third trend in networking also exacerbates the virus threat: the trend towards the deployment of Groupware applications such as Lotus Notes, Microsoft Exchange, Novell Groupwise, ...
Since the active and repeated sharing of documents over the network is at the core of these applications, they represent a fertile ground for the deployment of macro viruses. A Groupware application not only acts as a repository for shared documents, but, due to its collaborative function, it simultaneously broadcasts files to associated work groups. The broadcast of files significantly multiplies the possibility of accidentally deploying mail infected by attached macro viruses and makes Groupware protection a high priority.

### Symptoms of Virus Infection

Most viruses attempt to remain undetected as long as possible to extend their destructive influence. Therefore, most viruses do not produce any recognizable profile or signature that would allow to trap them by scanning the software. However, viruses perform actions that do not look like normal computer operations or user operations. These abnormal actions can be detected by intelligent anti-virus software. Fortunately, many viruses have telltale symptoms and may inadvertently give off signals that can alert users and virus protection software to their presence.

Some of these symptoms include:
- Increase in byte length of files,
- Alterations of a file's time stamp,
- Delayed program loading or activation,
- Reduced performance,
- Lower system resources, available memory, disk space,
- Bad sectors on floppies and hard drives,
- Strange or non-standard error messages,
- Non-standard screen activity, display fluctuations,
- Program inoperability (failing to execute),
- Incomplete or failed system boots, and
- Uninitiated drive writes.

### Anti-virus Software Overview

### Detecting a Virus

Viruses are becoming increasingly sophisticated and, as such, can defeat simpler, single dimension software packages. To be effective, the anti-virus software must include special-purpose, distributed applications. Applications can detect viruses using five distinct methods:
- **Signature Scanning:** This method compares the content of files against a database of virus signatures. This method requires frequent updates of the database to ensure the identification of new and changing signatures.
- **Integrity Checking:** This method compares the profile of current files and disk areas against an archived snap shop of these same items. The detected differences may indicate the presence of a virus. Check summing is the most common type of integrity checking. Unfortunately, integrity checking is generally not effective against modern stealth viruses, so further detecting means are needed.
- **Heuristic Analysis:** An artificial intelligence monitors virus-like behavior, such as trapping certain interrupt services or attempting unlikely actions such as reformatting the hard disk.
- **Polymorphic Analysis:** Polymorphic viruses are difficult to detect because they constantly change their look, particularly when they are encrypted or when they use stealth techniques to hide their presence. A polymorphic analyzer will move any suspect file to a separate, protected, location in the computer and will execute it there to see if it exhibits any virus-like behavior.
- **Macro Virus Analysis:** A specifically designed anti-virus software detects macros in files and tests them before execution.

### Archived and Compressed Files

In addition to the support of these five types of virus analysis, an effective anti-virus system must also be able to scan archived and compressed files. Zip (or Pkzip) and Microsoft Compression are the most common tools for archiving and compressing a file. A virus can hide inside a compressed archive, and can remain dormant or unnoticed until the infected file is extracted and released into a system. The minimum for an efficient anti-virus system is to be able to scan most current types of archives to identify viruses stored within the files they contain.

### Frequency of Database Signature Update

Finally, the ability of a virus software to prevent virus attacks is determined by its ability to maintain an updated virus signature database. Any anti-virus software must have an associated, easily accessible Web site, or some other online source of information, where regular virus database updates can be retrieved. Products that automate this update process by using an Internet connection to regularly collect new information have a clear advantage in this regard.

### Real Time and Scheduled Virus Scanning

Most anti-virus software can perform a scan of a computer in order to detect and possibly treat the viruses found at that time. This process is called scanning. Scanning a computer for viruses can occur:
- at regular intervals under the control of a scheduler, or
- as an on-demand operation manually executed, or
- as an event-activated operation (usually in response to some recognizably "illegal" behavior by a potential virus).
In addition, viruses can be detected in real time, when they are received. This capability is important because if viruses can be detected when they attempt to enter within a system (computer, data repository, server ...), then it is possible to prevent them from corrupting other files. Oftentimes, a scheduled scan may occur after a virus has already entered within a computer and has corrupted other files. Obviously, the earlier a virus can be detected, the better.

To be truly useful, an anti-virus software must have the ability to perform all types of scans.

### Certificate

A Certificate is a structure that contains a public value (i.e. a public key) associated with an identity. For instance, within a X.509 Certificate, the public key is bound to a "user's name". A third party (a Certificate Authority) attests that the public key belongs to the user. A X.509 Certificate is a very formal structure and comprises different elements:
- ***Subject:*** This is the "user's name" (the Subject can be any identity value).
- ***Issuer:*** This is the name of the third party that has issued/generated the certificate. This third party is the Certificate Authority (CA).
- ***Public Key Value:*** This is the public key of a public/private key pair. An associated field defines the public key algorithm that must be used, for instance a RSA, Diffie-Hellman or DSA public key.
- ***Validity:*** Two fields are used to define the period of validity (valid from date 1 and valid to date 2).
- ***Serial Number:*** This field provides a unique Certificate serial number for the issuer.
- ***Signature:*** The signature is an encrypted digest generated by the Certificate Authority (CA) for authenticating the whole certificate. The digest results from the hashing of the Certificate. The digest is encrypted using the CA private key. The encrypted digest which is the signature, "certifies" that the Subject is the "owner" of the public and private keys.

### Certificate Verification

The Certificate needs to be verified to ensure that it is valid. This is a quite complex process. The verification by an end user of a Certificate comprises the checking of the following elements:
- Valid (or any) Subject and Issuer names are defined in the Certificate.
- The Certificate is not expired (checking of the Validity period field).
- The Certificate has not been revoked (this may be determined by obtaining a current Certificate Revocation List from the CA).
- The signature on the Certificate is valid (the signature is not verified by using the Certificate's public key but by using the CA public key).

The method for validating the signature is quite simple, and comprises the steps of:
- extracting the issuer's name (CA name) from the Certificate;
- locating the issuer's Certificate (CA Certificate) or the issuer's public key (CA public key).
- checking that the end user's Certificate signature was generated by the issuer (CA) using the issuer's public key (CA public key).

Certificates are generated by a Certificate Authority (CA). Two main methods can be used:
- ***Centralized Generation:*** The private/public key pair is generated by the end user (defined in the subject field of the Certificate). The public key is directly provided by the end user to the CA software to create a Certificate. The Certificate can be provided to another end user via any suitable channel. The channel does not have to be secure because a Certificate is a self protecting structure (given the CA's signature).
- ***Distributed Generation:*** The private/public key pair is generated by the end user. The end user requests the CA to build a Certificate including the end user public key. The public key is then sent to the CA for certification. If the request is valid then the CA returns a Certificate associating the user identity with the user public key to the end user.

Of course these two methods can be combined in any system, because trusted CA keys are generated by the Certificate Authority (CA).

International patent application WO 97/50036 entitled "Computationally Efficient Method for Trusted and Dynamic Digital Objects Dissemination" Marasimhalu et al. (31 December 1997) discloses a computationally efficient method for trusted and dynamic dissemination of digital objects. Related digital objects of various types are grouped, based on their usage and functionality, by an information provider into distribution packages. Trustworthiness of objects contained in a distribution package are certified by a trusted certification authority in the form of a certificate which consists of a body and the certification authority's signature on the body based on a public-key digital signature scheme. The body further consists of the name of the information provided; name of the distribution package; and type, safety checking flag, and digest of each and every object. It is used by end users to verify the trust criteria of any individual or any subset of objects specified by the package. To verify whether a received object meets trust criteria certified by the certificate, the end user computes the digest of the object, compares it with the corresponding digest in the certificate, and examines the type and safety checking flag of the object contained in the certificate. The end user can dynamically download additional objects, check their trustworthiness without having to verify the certificate multiple times.

### Objects of the invention

Current anti-virus method are becoming more and more complex due to:
- the number of viruses,
- the difficulty to find them, and
- the fact that their signature can change with time or environment.
Virus are coming from everywhere and especially from the Internet network. The time required to check a disk within a computer system, becomes more and more important. Furthermore, the checking of a disk involves the use of resources which may prevent the normal use of the computer system.

An object of the present invention is to improve current anti-virus methods and to provide a new method using file Certificates similar to X.509 Certificates used to authenticate an identity. A specific process associates a Certificate with a file to speed up and improve the anti-virus processing.

It is another object of the present invention to associate files with a Certificate in view of simplifying the anti-virus processing of said files.

It is another object of the present invention to validate a file against all known viruses. A Certificate is added to the file. The Certificate includes a signature made by a trusted server. This signature avoids local computer systems to check this file for all existing virus. The trusted server validates the file against all known viruses. This server can use one or several anti-virus checkers. In case of new virus only the certificates are changed or updated. The only process performed by the local computer system is to verify the file against the signature included in the Certificate.

It is another object of the present invention to drastically simplify the computing resources used for virus detection. Files on Web Servers are downloaded with their certificates suppressing the risk of virus. The full anti-virus is done once instead of being done locally on each computer system.

It is another object of the present invention to generate a virus-free Certificate associated with a file using a trusted Anti-virus Certificate Authentication Server.

It is another object of the present invention to use this virus-free Certificate on a workstation to perform an anti-virus detection.

### Summary of the invention

The present invention relates to computer virus and more particularly to a method, system and computer program for using a virus-free file certificate as disclosed in the independent claim 1.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1 describes the different entities involved in the anti-virus system according to the present invention.
- Figure 2 describes the content of a virus-free Certificate according to the present invention.
- Figure 3 is a flow chart of the method of requesting and generating a virus-free Certificate for a file according to the present invention.
- Figures 4a and 4b are a flow charts of the method of using a virus-free Certificate in a workstation according to the present invention.

### Preferred embodiment of the invention

### Introduction

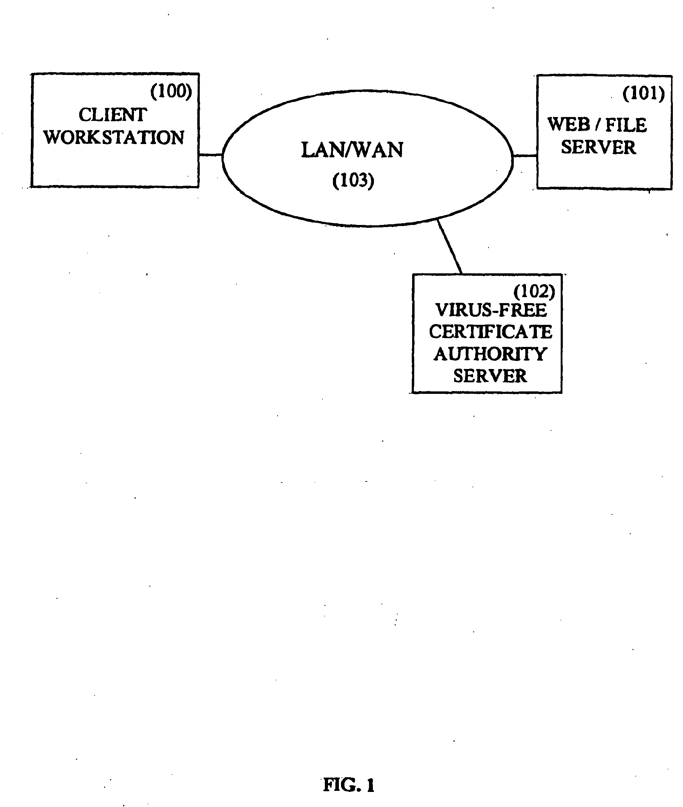

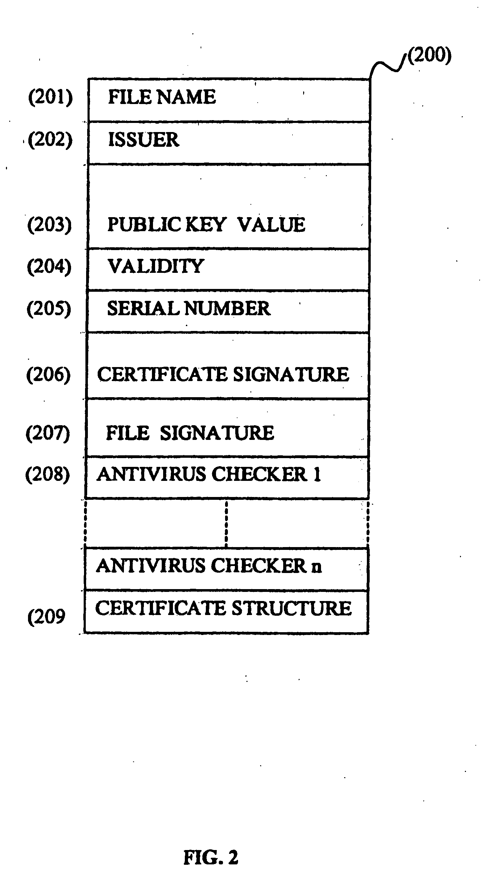

Figure 1 describes the different entities involved in the anti-virus system disclosed in the present invention. In most of the cases, the file that the Client Workstation (100) requires, is stored in a Web / File Server (101). A Certificate, stored in a directory within the Web / File Server (101), is associated with this file. The Certificate is provided by a Virus-Free Certificate Authority Server (102) after request. Said request is sent by the Web / File Server (101) to the Virus-Free Certificate Authority Server (102) through a LAN / WAN (Local Area Network / Wide Area Network) (103) which can include the Internet network. The Client Workstation (100) then downloads both file and associated Certificate in a directory and asks its anti-virus program to check the file. This checking process does not use any standard anti-virus program but is based on the previously downloaded Certificate. The only verification required for determining whether the file is virus-free or not, is the verification of the signature comprised in the Certificate. All the above mentioned method will be better understood with respect to Figures 2, 3 and 4a/4b.

### Virus-free Certificate

Figure 2 describes the content of a virus-free Certificate according to the present invention. The virus-free Certificate reuses the standard X.509 certificate format. It contains the signature of the file and therefore is bound to this file. The main difference between a X.509 Certificate and the virus-free Certificate is that the virus-free Certificate comprises:
- an anti-virus name and level;
- a signature of the file.

The virus-free Certificate (200) includes the following fields:
- ***File name (201):*** This is the "name" of the file protected that the virus-free Certificate protects.
- ***Issuer (202):*** This is the "name" of the third party that issued/generated the virus-free Certificate. This third party is the Virus-free Certificate Authority (VCA).
- ***Public Key Value (203):*** This is the public key of a public/private key pair. An associated field defines the public key algorithm that must be used to check the file signature, for instance a RSA , Diffie-Hellman or DSA public key. The public key is provided by the Virus-free Certificate Authority which uses the corresponding private key to build the signature of files. So the same private/public key pair may be used to build several virus-free Certificates from the same issuer. This public key within the virus-free Certificate is preferably used instead of the Virus-free Certificate Authority public key which is used to validate only the present certificate signature and not the file signature. A public key for decrypting the imbedded signature is added within the virus-free Certificate because the Virus-free Certificate Authority public key is generally longer and more complex. The validity of keys may also differ between the Virus-free Certificate Authority public key and the virus-free Certificate public key. Anyway, because the virus-free Certificate is signed by the Virus-free Certificate Authority, the use of the virus-free Certificate public key is secure.
- ***Validity (204):*** Two fields are used to define the period of validity (valid from date 1 and valid to date 2).
- ***Serial Number (205)**:* This field provides a unique virus-free Certificate serial number for the issuer.
- ***Certificate Signature (206)**:* The certificate signature is an encrypted digest generated by the Virus-free Certificate Authority (VCA) for authenticating the whole Certificate. The digest results from the hashing of the virus-free Certificate.
   The digest is encrypted using the VCA private key. The certificate signature results from the encrypted digest and "certifies" that the file signature is encrypted by the private key associated with the virus-free certificate public key (203). The Virus-free Certificate Authority (VCA) public key is different from the virus-free Certificate public key and is either preloaded in the web browser or given by a trusted entity. The VCA public key is used to retrieve the original hashing of the full certificate. The Virus-free Certificate Authority (VCA) can use the same set of virus-free certificate private / public keys (203) for all the files generated during a given period of time so the cross-checking of the issuer authentication can be easily performed time to time, when a new set of keys is used. Once the virus-free Certificate public key for a issuer is validated, it can be reused for several files certified by the same issuer which reduces the number of virus-free Certificate public keys.
- ***File Signature (207):*** The File Signature is verified using the public key value given in the virus-free Certificate
- ***Anti-virus Checker (208):*** This field gives an indication of how the virus-free Certificate has verified that the file was virus-free. The Anti-virus Checker comprises the name and the level of the anti-virus program. Several anti-virus programs and levels may be appended to reinforce the efficiency of the anti-virus detection.
- ***Certificate Structure (209):*** This field describes the size and the content of the virus-free Certificate fields. The number or anti-virus program is defined in this field.
- If the virus-free Certificate uses a standard format (minimum size of a virus-free Certificate), this field is optional.
- If the size of the virus-free Certificate is above the size of the standard format (above the minimum size), this field is mandatory and defines the size of the fields comprised in the virus-free Certificate.

### Virus-free Certificate Generation

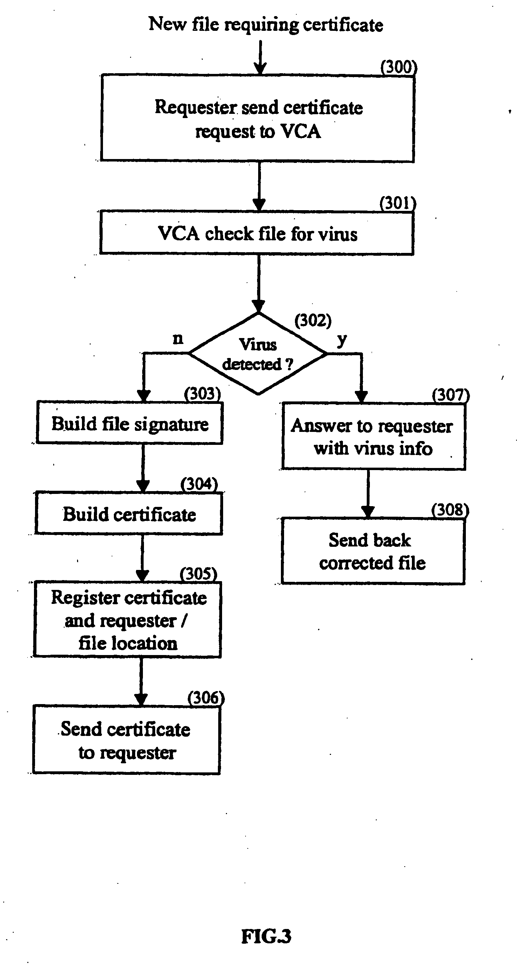

Figure 3 describes the process of requesting a virus-free Certificate for a file located on a Web Server or on a File Server (101). Nothing prevents workstations (100) to request a Certificate Authority (102) to build virus-free Certificates in real time but the most appropriate way to do is to let the Web / File Servers (101) send requests to the Certificate Authority (102) to build virus-free Certificates and to let them store the files and associated anti-virus Certificate together. The method of requesting and generating a virus-free certificate comprises the following steps:
- (300) When a new file requires a virus-free Certificate, the requester, Web /File Server (101) or workstation (100), sends a virus-free Certificate request message to a Virus-free Certificate Authority (VCA) Server (102). Either the file is sent to the Virus-free Certificate Authority (VCA) Server (102) in addition to this request message or the checking / signature is done on the Web / File Server (101) or workstation (100) where the file is stored. The request may specify the anti-virus checking method or the use of a particular anti-virus program.
- (301) The Virus-free Certificate Authority (VCA) Server starts by checking the file.
- (302) The Virus-free Certificate determines whether the file is virus-free or not:
   If a virus is detected,
      - (307) the VCA Server answers the requester with an information concerning the detected virus.
      - (308) Eventually, the VCA Server sends back to the requested a corrected file.
   If no virus is detected,
      - (303) A signature of the file is established.
      - (304) The virus-free Certificate is prepared with this signature.
      - (305) The virus-free Certificate and the requester identification, are then stored in the VCA. The requester identification may include the file location within the Web / File Server or workstation. The file location is useful when the requester needs a regular and automatic update of the virus-free Certificate (for instance, when the virus-free Certificate expires or when a new level of anti-virus program is provided). In that case the VCA can access the file and can update the virus-free Certificate without any action from the Server or workstation.
      - (306) Finally, the virus-free Certificate is sent to the requester.
   For a better understanding, the VCA is shown in the present embodiment as an independent Server. However, the VCA can be located within a Web / file Server (101). It is possible for a master Certificate Authority server to delegate virus-free Certificate establishment to trusted servers or workstations.

### Virus-Free Certificate Utilization

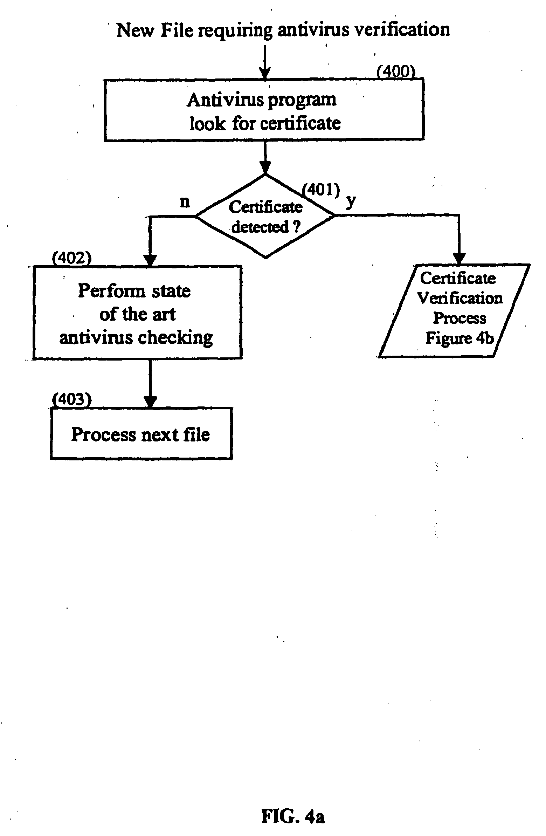

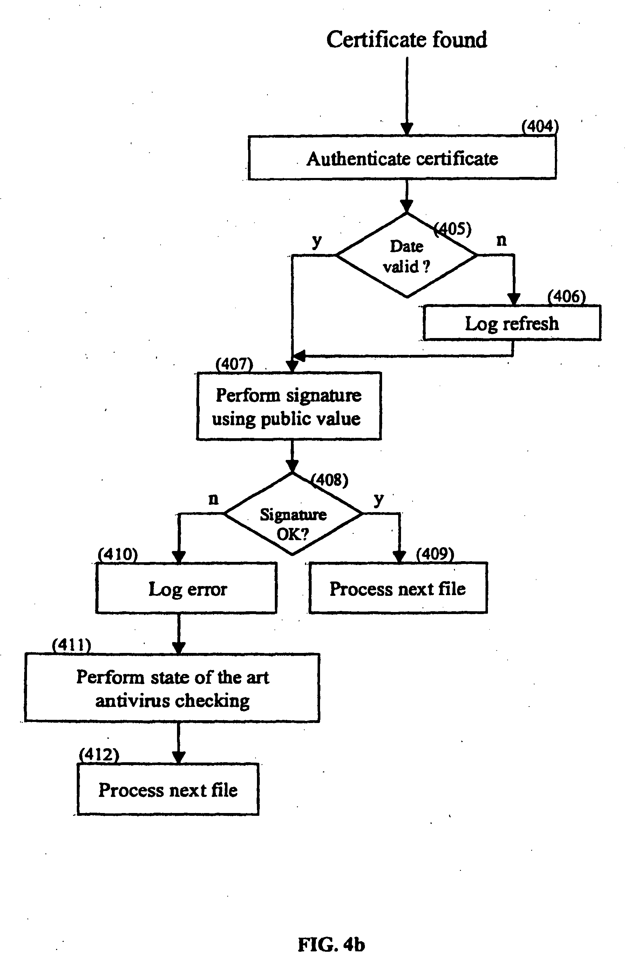

Figures 4a and 4b describe the process of using the virus-free Certificate in a workstation according to the present invention. A File is downloaded with its free-virus Certificate onto a workstation. The anti-virus program performs a checking on this incoming file. The anti-virus program can also check all files assigned by configuration. Some files may have an associated virus-free Certificate, other files may have no Certificate. The present method of a using a free-virus Certificate in a workstation comprises the following steps:
- (400) When scanning files, the anti-virus program first looks for the virus-free Certificate associated with the file to check. The virus-free Certificate may be in the same directory as the file or in a specific directory with all free-virus Certificates. Other settings may be defined but the two settings above are the these used in the present embodiment.
- (401) The virus-free program looks for the virus-free Certificate:
   If a virus-free Certificate for this file is not found:
      - (402) The process goes on as described in the background art.
      - (403) The process goes on by checking the next file.
   If the virus-free Certificate for this file is found:
      - (404) The virus-free Certificate is authenticated using the certificate signature and the VCA public key. The VCA public key is in the workstation or if not must be retrieved through a secure channel. The VCA server may be authenticated by another CA having the required public key.
      - (405) Date of expiration, issuer name (VCA name), in addition to the certificate signature determined in the previous step (404) are checked and validated. The anti-virus program may also be checked and in particular levels used to build the Certificate which may or may not be accepted by the local anti-virus program depending on predetermined rules.
      - (406) If the virus-free Certificate is not valid or authenticated with some obsolete or non matching rules, a log is performed in order to process on real time or on batch mode a refresh action on the VCA to update the Certificate in order to match the rules and dates. When received the new Certificates will allow to process again these files for anti-virus checking.
      - (407) If the virus-free Certificate is fully authenticated, the file signature is verified using the public value key included in the virus-free Certificate. The public value key must match with the file signature also included in the virus-free Certificate.
      - (408) The file signature is checked.
   If the file signature is OK,
      - (409) The next file is checked.
   If the file signature is not OK,
      - (410) A log error is performed.
      - (411) The normal anti-virus program is activated to check this suspect file.
      - (412) Finally, the next file is checked.

The Log Error file is processed at the end of the file checking and may ask the VCA to check the file again in order to produce another virus-free Certificate. If a virus is found on this file, the security administrator will retrieve all available information to understand where the virus was introduced, who introduced it...

### Advantages

- The proposed invention provides a better and faster way for checking files against viruses.
- Servers offer a better security for all the files they send to their clients.
- The full anti-virus checking is performed once on the virus-free Certificate Authority (VCA) Server.
- A Certificate update method is provided.
- Normal ant-virus processes may be used as backup and may handle files without Certificate. The compatibility with existing anti-virus programs is easy because a software supervisor can
   - verify virus-free Certificates for files having one, and
   - rely on and call any anti-virus program to perform a state of the art virus detection for other files.
- The present invention is
   - for users, in line with current security strategies based on Certificate Authority and Certificates, and
   - for files, an extension that can be easily deployed.

## Claims

1. A method, for use in a server (101) or client (102) system, of determining that a file is virus free comprising the steps of :
• determining (400) whether a virus-free certificate (200) is associated with a file, said-virus free certificate being generated by a Virus-Free Certificate Authority and comprising a certificate signature (206) and a file signature (207); • if a virus free certificate associated with said file is found:
• authenticating (404) the virus-free certificate by verifying said certificate signature;
• verifying (407) said file signature included in the virus-free certificate;
**characterised in that**:
• said virus-free certificate further comprises name and level of one or more anti-virus programs (208) used by the Virus-Free Certificate Authority to determine that the file is virus-free, and
• the method further comprises the steps of:
• checking (405) said name and level of the one or plurality of anti-virus programs listed in the virus-free certificate according to one or a plurality of predefined rules;
• considering (406) that the virus-free certificate is not valid if the name and level of the one or plurality of anti-virus programs listed in the virus-free certificate do not match with said one or plurality of predefined rules.

2. The method according to the preceding claim wherein said step of authenticating (407) the file comprises the further steps of:
• decrypting the file signature (207) using a public key (203) comprised in the virus-free certificate (200).
• hashing the file to generate a file digest; and
• comparing the decrypted file signature with the generated file digest.

3. The method according to any one of the preceding claims wherein the step of authenticating the virus-free certificate comprises the further step of:
• validating the virus-free certificate.

4. The method according to claim 3 wherein the step of validating the virus-free certificate comprises the further step of:
• determining whether the virus-free certificate is valid or not;
If the virus-free certificate is not valid:
• requesting a virus-free certificate update or a new virus-free certificate to a virus-free certificate authority (102).

5. The method according to any one of the preceding claims wherein the virus-free certificate (200) further comprises:
• a file identification (201);
• a virus-free certificate authority identification (202);
• a public key (203) for decrypting the file signature; and
• an indication of the virus-free certificate validity (204).

6. A server (101) or client (100) system, comprising means adapted for carrying out the steps of the method according to any one of the preceding claims.

7. A computer program comprising instructions for carrying out the method according to any one of claims 1 to 5.

## Patentansprüche

1. Verfahren zum Einsatz in einem Server-System (101) oder in einem Client-System (102), das zur Feststellung, ob eine Datei virenfrei ist, dient und die folgenden Schritte umfasst:
• Feststellen (400), ob zu einer Datei ein Zertifikat "Virusfrei" (200) gehört, wobei das "Virusfrei"-Zertifikat von einer Zertifizierungsstelle für "Virusfrei"-Zertifikate erzeugt wird und eine Zertifikatsignatur (206) und eine Dateisignatur (207) umfasst;
• wenn ein zu der Datei gehörendes "Virusfrei"-Zertifikat gefunden wird:
• Nachweisen (404)der Echtheit des "Virusfrei"-Zertifikats durch Prüfung der Zertifikatsignatur;
• Prüfen (407) der Echtheit der in dem "Virusfrei"-Zertifikat enthaltenen Dateisignatur;
**dadurch gekennzeichnet, dass**
• das "Virusfrei"-Zertifikat des Weiteren den Namen und die Version von einem oder mehreren Anti-Virus-Programmen (208) umfasst, die von der Zertifizierungsstelle für "Virusfrei"-Zertifikate zur Feststellung, ob die Datei virenfrei ist, verwendet wird und
• wobei das Verfahren des Weiteren die folgenden Schritte umfasst:
• Prüfen (405) des Namens und der Version von dem einen oder der Vielzahl der in dem "Virusfrei"-Zertifikat aufgeführten Anti-Virus-Programme nach einer oder einer Vielzahl von vorher festgelegten Regeln;
• Berücksichtigen (406), dass das "Virusfrei"-Zertifikat nicht gültig ist, wenn der Name und die Version von dem einen oder der Vielzahl der in dem "Virusfrei"-Zertifikat aufgeführten Anti-Virus-Programme nicht mit der einen oder der Vielzahl der vorher festgelegten Regeln übereinstimmen.

2. Verfahren nach dem vorhergehenden Anspruch, wobei der Schritt des Nachweises der Echtheit (407) der Datei die folgenden weiteren Schritte umfasst:
• Entschlüsseln der Dateisignatur (207) mit Hilfe eines öffentlichen Schlüssels (203), der in dem "Virusfrei"-Zertifikat (200) enthalten ist;
• Anwenden des Hashing-Algorithmus auf die Datei, um eine Zusammenfassung der Datei zu erzeugen; und
• Vergleichen der entschlüsselten Dateisignatur mit der erzeugten Zusammenfassung der Datei.

3. Verfahren nach einem der vorhergehenden Ansprüche, wobei der Schritt des Nachweises der Echtheit des "Virusfrei"-Zertifikats den folgenden weiteren Schritt umfasst:
• Bestätigen der Gültigkeit des "Virusfrei"-Zertifikats.

4. Verfahren nach Anspruch 3, wobei der Schritt der Bestätigung der Gültigkeit des "Virusfrei"-Zertifikats den folgenden weiteren Schritt umfasst:
• Feststellen, ob das "Virusfrei"-Zertifikat gültig ist; wenn das "Virusfrei"-Zertifikat nicht gültig ist:
• Anfordern einer Aktualisierung des "Virusfrei"-Zertifikats oder eines neuen "Virusfrei"-Zertifikats von einer Zertifizierungsstelle für "Virusfrei"-Zertifikate (102).

5. Verfahren nach einem der vorhergehenden Ansprüche, wobei das "Virusfrei"-Zertifikat (200) des Weiteren Folgendes umfasst:
• eine Dateikennung (201);
• eine Kennung (202) einer Zertifizierungsstelle für "Virusfrei"-Zertifikate;
• einen öffentlichen Schlüssel (203) zur Entschlüsselung der Dateisignatur; und
• eine Angabe der Gültigkeit (204) des "Virusfrei"-Zertifikats.

6. Server-System (101) oder Client-System (100), das ein Mittel umfasst, welches zur Durchführung der Schritte des Verfahrens nach einem der vorhergehenden Ansprüche ausgelegt ist.

7. Rechnerprogramm, das Befehle zur Durchführung des Verfahrens nach einem der Ansprüche 1 bis 5 umfasst.

## Revendications

1. Procédé à utiliser dans un système de serveur (101) ou de client (102), consistant à déterminer qu'un fichier est dépourvu de virus, comprenant les étapes consistant à :
• déterminer (400) si un certificat d'absence de virus (200) est associé à un fichier, ledit certificat d'absence de virus étant généré par une autorité de certification d'absence de virus et comprenant une signature de certificat (206) et une signature de fichier (207),
• si un certificat d'absence de virus associé audit fichier est trouvé :
• authentifier (404) le certificat d'absence de virus en vérifiant ladite signature de certificat,
• vérifier (407) ladite signature de fichier incluse dans le certificat d'absence de virus,
**caractérisé en ce que**
• ledit certificat d'absence de virus comprend en outre un nom et un niveau d'un ou plusieurs programmes anti-virus (208) utilisés par l'autorité de certification d'absence de virus pour déterminer que le fichier est dépourvu de virus, et
• le procédé comprend en outre les étapes consistant à :
• contrôler (405) lesdits nom et niveau du programme ou de la pluralité de programmes anti-virus cités dans le certificat d'absence de virus conformément à une règle ou une pluralité de règles prédéfmies,
• considérer (406) que le certificat d'absence de virus n'est pas valide si le nom et le niveau du programme ou de la pluralité de programmes anti-virus cités dans le certificat d'absence de virus ne correspondent pas à ladite règle ou à la pluralité de règles prédéfinies.

2. Procédé selon la revendication précédente, dans lequel ladite étape d'authentification (407) du fichier comprend les étapes supplémentaires consistant à :
• décrypter la signature de fichier (207) en utilisant une clé publique (203) comprise dans le certificat d'absence de virus (200),
• hacher le fichier pour générer un abrégé de fichier, et
• comparer la signature de fichier décryptée à l'abrégé de fichier généré.

3. Procédé selon l'une quelconque des revendications précédentes, dans lequel l'étape d'authentification du certificat d'absence de virus comprend l'étape supplémentaire consistant à :
• valider le certificat d'absence de virus.

4. Procédé selon la revendication 3, dans lequel l'étape de validation du certificat d'absence de virus comprend l'étape supplémentaire consistant à :
• déterminer si le certificat d'absence de virus est valide ou non,
Si le certificat d'absence de virus n'est pas valide :
• demander une mise à jour du certificat d'absence de virus ou un nouveau certificat d'absence de virus à une autorité de certification d'absence de virus (102).

5. Procédé selon l'une quelconque des revendications précédentes, dans lequel le certificat d'absence de virus (200) comprend en outre :
• une identification de fichier (201),
• une identification d'autorité de certification d'absence de virus (202),
• une clé publique (203) destinée à décrypter la signature du fichier, et
• une indication de la validité du certificat d'absence de virus (204).

6. Système de serveur (101) ou de client (100), comprenant un moyen conçu pour exécuter les étapes du procédé selon l'une quelconque des revendications précédentes.

7. Programme informatique comprenant des instructions destinées à exécuter le procédé selon l'une quelconque des revendications 1 à 5.
